# EUROPÄISCHE PATENTSCHRIFT

(11) **EP 0 555 263 B1**
(45) Veröffentlichungstag und Bekanntmachung des Hinweises auf die Patenterteilung: **28.09.1994**
(21) Anmeldenummer: 91918273.3
(22) Anmeldetag: 26.10.1991
(51) Int. Cl.: C25D 21/12

(54) **VORRICHTUNG ZUM AUFTRAGEN VON ÜBERZÜGEN BEI WERKSTÜCKEN IM DENTALEN BEREICH**
DEVICE FOR COATING WORKPIECES USED IN THE DENTAL FIELD
DISPOSITIF POUR L'APPLICATION DE REVETEMENTS SUR DES PIECES DANS LE DOMAINE DENTAIRE

(30) Priorität: 29.10.1990 DE 4034349
(43) Veröffentlichungstag der Anmeldung: 18.08.1993
(73) Patentinhaber: GRAMM, Gerhard, D-75233 Tiefenbronn (DE)
(72) Erfinder: GRAMM, Gerhard, D-75233 Tiefenbronn (DE)
(74) Vertreter: Jeck, Anton, Dipl.-Ing.
(86) Internationale Anmeldenummer: EP9102026
(87) Internationale Veröffentlichungsnummer: WO9207977

(56) Entgegenhaltungen:
- GB-A- 875 595
- GB-A- 1 144 756
- US-A- 3 627 648
- PATENT ABSTRACTS OF JAPAN vol. 12, no 405 (C-539)(3252) 26. Oktober 1988 & JP,A,63 143 296 ( FUJI ELECTRIC CO LTD ) 15. Juni 1988
- PATENT ABSTRACTS OF JAPAN vol. 10, no. 339 (C-385)(2395) 15. November 1986 & JP,A,61 143 599 ( TOSHIHARU NAKAI ) 1. Juli 1986

## Beschreibung

Die Erfindung betrifft eine Vorrichtung zum Auftragen von Überzügen bei Werkstücken mit einem Elektrolyte aufnehmenden Behälter, in den die Werkstücke tragende Katoden sowie eine Meßsonde einbringbar sind, sowie mindestens einer Anode.

Herkömmliche Geräte der eingangs genannten Art besitzen regelmäßig eine Katode, die mit einem Werkstück betrieblich verbindbar ist. Innerhalb des Behälters befindet sich eine Meßsonde, deren Meßwerte von einem Display ablesbar sind. Weicht die im Elektrolyten herrschende Ist-Spannung von einer Soll-Spannung ab, dann wird die Soll-Spannung manuell eingestellt. Ein weiterer Nachteil, mit dem die bekannte Vorrichtung behaftet ist, besteht darin, daß dort Strom und Spannung im Gleichrichter gemessen werden. Dabei erfolgt die Regelung nach bekannter Fläche, daß heißt, die Fläche muß bekannt sein, und zwar außerhalb des Elektrolyts.

In der GB-A 11 44 756 ist eine Vorrichtung zum Auftragen von Überzügen offenbart, bei der das Werkstück zwischen einer Anode und einer Katode angeordnet ist. Wie die Anode und die Katode bei mehreren Werkstücken angeordnet sein müssen, geht aus dieser Druckschrift nicht hervor.

Ausgehend von dem obigen Stand der Technik liegt der Erfindung die Aufgabe zugrunde, hier Abhilfe zu schaffen und die gattungsgemäße Vorrichtung so weiterzubilden, daß gleichzeitig mehrere Werkstücke mit unbekannter Fläche und/oder Geometrie mit Überzügen unter automatischer Regulierung versehen werden können.

Die gestellte Aufgabe wird erfindungsgemäß durch eine Vorrichtung gemäß Anspruch 1 gelöst.

Die Erfindung geht von der Erkenntnis aus, daß die Spannung pro Oberflächeneinheit des Werkstückes, die während des Galvanisierens im Elektrolyt herrschen muß, annähernd konstant ist und daß diese Spannung für alle Werkstücke dann optimal gemessen werden kann, wenn die Meßsonde mit gleichem Abstand zu allen Elektroden und in deren Spannungsfeld angeordnet ist, wobei sie die Spannung im hydrodynamischen Schatten der Werkstücke mißt.

Die Meßsonde ist mit einer Steuerungseinrichtung funktionell verbunden, so daß eine automatische Nachregulierung, sollte die Soll-Spannung von der Ist-Spannung abweichen, erfolgt.

Weitere zweckmäßige und vorteilhafte Ausgestaltungen der Erfindung gehen aus den Unteransprüchen hervor.

Die Betriebsspannung im Elektrolyten kann dadurch optimiert werden, wenn die Anode die Form eines Ringes besitzt, der koaxial zur Achse der Meßsonde angeordnet ist. Hierbei ist es vorteilhaft, wenn der Innenradius des Ringes etwa dem Abstand der Werkstücke von der Achse der Sonde entspricht. Die Anode könnte jedoch auch durch den Behälter selbst gebildet sein.

Eine weitere zweckmäßige Ausgestaltung der Erfindung sieht vor, daß die Katoden, die Anode sowie die Meßsonde vom Verschluß des Behälters getragen sind. Im Rahmen dieses Erfindungsgedankens ist es besonders zweckmäßig, wenn in der dem Behälter zugewandten Seite des Verschlusses die Katoden als Bohrungen ausgebildet sind, in die die Werkstücke tragenden Träger einsteckbar sind.

Um das im Elektrolyten vorhandene Restmetall einfach beseitigen zu können, sieht eine weitere zweckmäßige Ausgestaltung der Erfindung vor, daß der Verschluß mit Katoden aus Chrom oder Nickel bestückbar ist.

Eine gleichmäßige Verteilung des Metalles im Elektrolyt wird hierbei dadurch gewährleistet, daß im Behälter eine oder ein Teil einer Rühreinrichtung für den Elektrolyten ausgebildet ist, durch die eine optimale Hydrodynamik erreicht wird.

Ein Ausführungsbeispiel der Erfindung ist in der Zeichnung schematisch dargestellt und wird im folgenden näher erläutert. Es zeigen
- Fig. 1: einen Teil einer Vorrichtung zum Auftragen von Überzügen bei Werkstücken in Vertikalschnitt und in Explosionsdarstellung und
- Fig. 2: eine Axialdraufsicht auf einen Verschluß des Behälters.

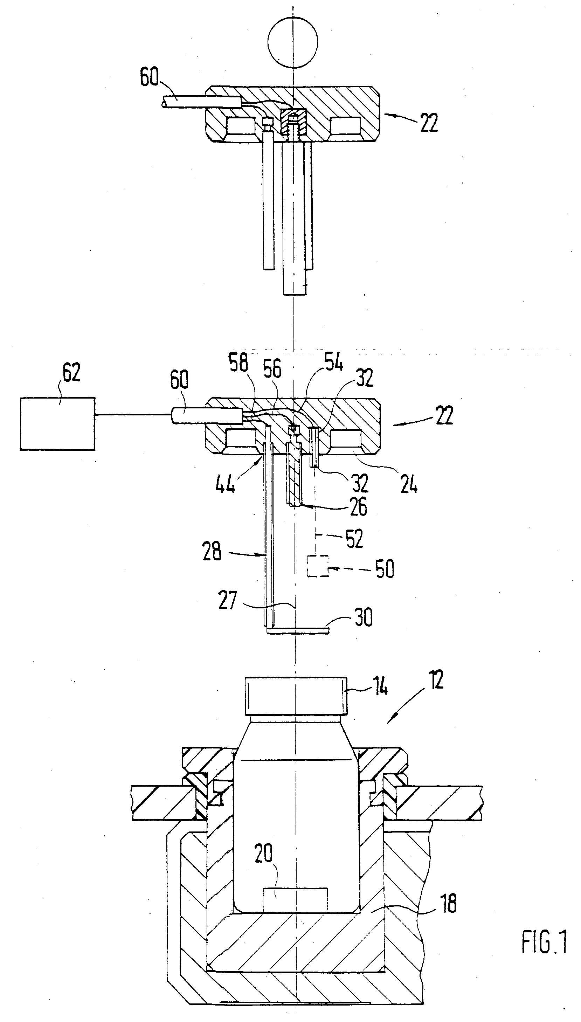

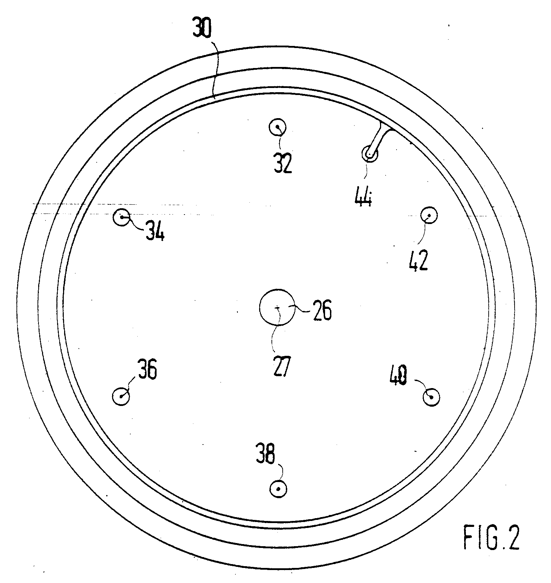

In Fig. 1 ist eine Vorrichtung zum Auftragen von Überzügen bei Werkstücken 50 mit einem Elektrolyte aufnehmenden Behälter 12 dargestellt, in den die Werkstücke 50 tragenden Elektroden 32,34,36,38,40,42 (vgl. Fig.2), eine Anode 28 sowie eine Meßsonde 26 einbringbar sind. Die mit den Katoden 32 bis 42 elektrisch verbindbaren Werkstücke 50 sind zwischen der Anode 28 und der Meßsonde 26 angeordnet. Die Meßsonde 26 ist an eine Steuerungseinrichtung 62 angeschlossen, durch welche die Betriebsspannung im Elektrolyten automatisch auf einen Soll-Wert eingestellt wird. Die Abstände zwischen der Meßsonde 26 und den einzelnen Werkstücken 50 sind etwa gleich groß. Die Werkstücke 50 sind gleichmäßig um die Achse 27 der Meßsonde 26 verteilt (vgl. auch Fig. 2). Im vorliegenden Ausführungsbeispiel sind sechs Katoden 32 bis 42 vorgesehen, wobei zwischen den Katoden 32 und 42 eine Aufnahme 44 für die Anode 28 ausgebildet ist. Die Anode 28 besitzt die Form eines Ringes 30, der koaxial zur Achse 27 der Meßsonde 26 angeordnet ist. Der Innenradius des Ringes 30 entspricht etwa dem Abstand der Werkstücke 50 von der Achse 27 der Sonde 26. Durch die Meßsonde 26 ist die Spannung in dem an den Katoden 32 bis 42 vorbeifließenden Elektrolyt meßbar. Durch die Steuerungseinrichtung 62 wird die Ist- mit der Soll-Spannung im Elektrolyt verglichen und auf den Soll-Wert eingestellt. Die Katoden 32 bis 42, die Anode 28 sowie die Meßsonde 26 sind vom Verschluß 22 des Behälters 12 getragen. In der den Behälter 12 zugewandten Seite des Verschlusses 22 sind die Katoden 32 bis 42 als Bohrungen ausgebildet, in die die Werkstücke 50 tragenden Träger 52 einsteckbar sind.

Die Meßsonde 26 ist als ein aus der Wand des Verschlusses 23 herausragender Stumpf ausgebildet. Ferner ist in der des Behälter 12 zugewandten Seite des Verschlusses 22 eine umlaufende Ringnut 24 ausgebildet, die eine dichte Verbindung zwischen dem Hals 14 und dem Verschluß 22 gewährleistet. Der Behälter 12 ist in einem Thermostat 18 angeordnet, durch den gewährleistet ist, daß die Betriebstemperatur, die für das Galvanisieren ermittelt wurde, eingehalten wird. Der Boden des Behälters 12 trägt eine Mischeinrichtung 20, durch die der Elektrolyt verwirbelt wird. Die Elektroden sowie die Meßsonde sind über Leitungen 54,56 und 58, die das Kabel 60 bilden, mit der Steuerungseinrichtung 62 betrieblich verbunden.

Beim Galvanisieren wird wie folgt vorgegangen: Der Behälter 12 wird mit Elektrolyt gefüllt und auf die Betriebstemperatur erwärmt. Danach wird der Behälter 12 mit dem Verschluß 22, der die Elektroden sowie die Werkstücke und die Meßsonde trägt, druckdicht abgeschlossen. Die Rühreinrichtung wird eingeschaltet und die Betriebsspannung, die experimentell festgestellt wurde, eingestellt. Da durch das Galvanisieren Metall aus dem Elektrolyten ausgeschieden wird und mit ihm die Werkstücke beschichtet werden, ändert sich die Spannung innerhalb des Elektrolyten. Dies wird durch die Meßsonde festgestellt und an die Steuerungseinrichtung weitergeleitet, die die erforderliche Betriebsspannung automatisch einstellt. Ist der Vorgang beendet, befindet sich im Elektrolyten noch ein wichtiger Anteil von Metallen, z.B. Gold im Goldbad, das erfindungsgemäß dadurch schnell und einfach ausgeschieden werden kann, daß die Elektroden z.B. mit Chrom-Nickelstäben beschichtet werden, die die Eigenschaft haben, Metalle aufzunehmen, mit ihnen jedoch keine feste Verbindungen herzustellen. Somit kann z.B. aus dem Goldbad annähernd die gesamte Menge des Goldes ausgeschieden werden.

Der hier beschriebenen Vorrichtung liegt folgende Überlegung zugrunde: In einem galvanischen Bad entsteht zwischen der Anode und dem Elektrolyt sowie innerhalb des Elektrolytes ein Übergangiwiderstand, der zu den Katoden, welche als Verbraucherwiderstände anzusehen sind, in Serie liegt. Demzufolge ändert sich die vor den Katoden liegende Spannung je nach Anzahl oder Größe der Katoden. Die vor der Katode liegende Spannung ist maßgebend für den Galvanisierstrom.

Daraus ergibt sich folgende Situation, wenn von einer konstanten Spannung zwischen Anoden- und Katodenanschlüssen ausgegangen wird. Sind die Katodenflächen klein, ist der Spannungsabfall an den in Serie liegenden Übergangswiderständen (oder im System zusätzlich eingebrachten Widerständen) auch klein und somit die daraus resultierende Galvanisierspannung vor den Katoden hoch. Dadurch ist der Galvanisierstrom für die kleinen Flächen zu hoch; die Schichtdicke wird zu stark und es kann sogar zu Verbrennungen kommen.

Im umgekehrten Fall, wenn die Katodenflächen groß sind, ist auch der Spannungsabfall an den in Serie liegenden Übergangswiderständen (oder im System zusätzlich eingebrachten Widerständen) auch groß und somit die daraus resultierende Galvanisierspannung vor den Katoden niedrig. Dadurch ist der Galvanisierstrom für die großen Flächen zu niedrig und somit wird eine zu geringe Schichtdicke erzeugt.

Die Erfindung bewirkt eine je nach Katodenfläche automatisch gestellte Anodenspannung, deren Höhe vor der Katode immer die gleiche Galvanisierspannung bereitstellt und somit einen flächenbezogenen Galvanisierstrom erzeugt, dieser kann auch zur Flächenbestimmung herangezogen werden, weil das Verhältnis zwischen der Fläche und den Strom bestimmt und berechnet werden kann.

Das Steuersystem der automatisch angepaßten Anoden- bzw. Arbeitsspannung arbeitet wie nachstehend beschrieben:

Durch eine mechanisch dem System und dem Bad angepaßte Meßsonde wird die vor den Katoden liegende Galvanisierspannung aufgenommen und einem Gleichstromregler oder -erzeuger mit entsprechender Regelkennlinie zugeführt, welcher dann nach Vorgabe des benötigten Flächenstromes (A/dm 2) bzw. der Galvanisierspannung vor den Katoden (Sondenspannung) wechselnde bzw. unterschiedliche Flächen mit der hierfür erforderlichen Arbeitsspannung versorgt. Hierdurch wird eine einheitliche Beschichtungsdicke auf große oder kleine bzw. viele oder wenige Teile gewährleistet.

Im bevorzugten Falle ist daher eine Meßsonde im Zentrum dieser Anordnung und überwacht die Galvanisierspannung, die zwischen Anode und Werkstücken anliegt. Über einen angeschlossenen Regelkreis wird hierdurch im Elektrolyt eine konstante Galvanisierspannung erzielt.

Eine optimale Ausregelung und Bewertung dieser Galvanisierspannung wird durch gleiche Abstände zwischen Anode und Werkstücken sowie zur Meßsonde ereicht.

## Patentansprüche

1. Vorrichtung zum Auftragen von Überzügen bei Werkstücken mit einem Elektrolyte aufnehmenden Behälter (12), in den die Werkstücke (50) tragende Katoden (32-46) sowie eine Meßsonde (26) einbringbar sind, sowie mindestens einer Anode (28), wobei die Meßsonde (26) im zwischen den Werkstücken und der Anode (28) herrschenden Spannungsfeld angeordnet und an eine Steuerungseinrichtung (62) angeschlossen ist, durch welche die Betriebsspannung im Elektrolyt sich automatisch auf einen Soll-Wert einstellt bzw. einstellbar ist,
dadurch gekennzeichnet,
daß die Abstände zwischen der Meßsonde (26) und den einzelnen Werkstücken (50) den Abständen der Werkstücke (50) von der Anode (28) entsprechen, daß die Werkstücke (50) gleichmäßig um die Meßsonde (26) verteilt sind, daß durch die Meßsonde (26) die Spannung in dem an den Katoden (32-46) vorbeifließenden Elektrolyt meßbar ist und
daß durch die Sternerungseinrichtung (62) die Ist- mit der Soll-Spannung im Elektrolyt verglichen und auf die Soll-Spannung eingestellt wird.

2. Vorrichtung nach Anspruch 1,
dadurch gekennzeichnet,
daß die Anode (28) die Form eines Ringes (30) besitzt, der koaxial zur Meßsonde (26) angeordnet ist.

3. Vorrichtung nach Anspruch 1 oder 2;
dadurch gekennzeichnet,
daß der Innenradius des Ringes (30) etwa dem Abstand der Werkstücke (50) von der Meßsonde (26) entspricht.

4. Vorrichtung nach einem der Ansprüche 1 bid 3,
dadurch gekennzeichnet,
daß die Katoden (32-42), die Anode (28) sowie die Meßsonde (26) zweckmäßigerweise vom Verschluß (22) des Behälters (12) getragen sind.

5. Vorrichtung nach einem der Ansprüche 1 bis 4,
dadurch gekennzeichnet,
daß in der dem Behälter (12) zugewandten Seite des Verschlusses (22) die Katoden (32-42) als Bohrungen ausgebildet sind, in die die Werkstücke (50) tragenden Träger (52) einsteckbar sind.

6. Vorrichtung nach einem der Ansprüche 1 bis 5,
dadurch gekennzeichnet,
daß die Meßsonde (26) als ein aus der Wand des Verschlusses (23) herausragender Stumpf ausgebildet ist.

7. Vorrichtung nach einem der Ansprüche 1 bis 6,
dadurch gekennzeichnet,
daß im Behälter (12) eine oder Teile einer Rühreinrichtung (20) für den Elektrolyten angeordnet ist.

## Claims

1. Apparatus for applying coatings to workpieces, having a container (12) which accommodates electrolytes and into which cathodes (32-46), carrying the workpieces (50), and one measuring probe (26) are insertable, and at least one anode (28), wherein the measuring probe (26) is disposed in the voltage field prevailing between the workpieces and the anode (28) and is connected to a control means (62), by means of which the operational voltage in the electrolyte is automatically set or is settable to a desired value, characterised in that the spacings between the measuring probe (26) and the individual workpieces (50) correspond to the spacings between the workpieces (50) and the anode (28), in that the workpieces (50) are distributed uniformly about the measuring probe (26), in that the voltage in the electrolyte, which flows past the cathodes (32-46), is measurable by the measuring probe (26), and in that the actual voltage is compared with the desired voltage in the electrolyte by the control means (62) and is set to the desired voltage.

2. Apparatus according to claim 1, characterised in that the anode (28) has the configuration of a ring (30), which is disposed coaxially relative to the measuring probe (26).

3. Apparatus according to claim 1 or 2, characterised in that the inner radius of the ring (30) corresponds substantially to the spacing between the workpieces (50) and the measuring probe (26).

4. Apparatus according to one of claims 1 to 3, characterised in that the cathodes (32-46), the anode (28) and the measuring probe (26) are advantageously carried by the closure (22) of the container (12).

5. Apparatus according to one of claims 1 to 4, characterised in that the cathodes (32-46) are in the form of bores in the side of the closure (22) facing the container (12), the carriers (52) carrying workpieces (50) and being insertable into said bores.

6. Apparatus according to one of claims 1 to 5, characterised in that the measuring probe (26) is in the form of a stump which protrudes from the wall of the closure (22).

7. Apparatus according to one of claims 1 to 6, characterised in that one or parts of a mixing means (20) for the electrolyte is or are disposed in the container (12).

## Revendications

1. Installation pour l'application de revêtements sur des pièces à traiter avec un récipient (12) contenant de l'électrolyte, récipient dans lequel peuvent être placées des cathodes (32 - 46) portant les pièces à traiter (50) ainsi qu'une sonde de mesure (26), installation dans laquelle la sonde de mesure (26) est disposée dans le champ électrique régnant entre les pièces à traiter et l'anode (28) et est raccordée à un dispositif de commande (62), au moyen duquel la tension de service dans l'électrolyte est ajustée ou peut être ajustée automatiquement à une valeur de consigne,
caractérisée par le fait
que les distances entre la sonde de mesure (26) et les différentes pièces à traiter (50) correspondent aux distances entre les pièces à traiter (50) et l'anode (28), que les pièces à traiter (50) sont distribuées uniformément autour de la sonde de mesure (26), que la sonde de mesure (26) permet de mesurer la tension dans l'électrolyte circulant le long des cathodes (32-46) et
qu'à l'aide du dispositif de commande (62) la tension instantanée est comparée avec la tension de consigne dans l'électrolyte et est ajustée à cette valeur de consigne.

2. Installation suivant la revendications 1,
caractérisée par le fait
que l'anode (28) présente la forme d'un anneau (30), qui est disposé coaxialement à l'axe (27) de la sonde de mesure (26).

3. Installation suivant la revendications 1 ou la revendication 2,
caractérisée par le fait
que le rayon intérieur de l'anneau (30) correspond sensiblement à la distance eentre les pièces à traiter (50) et l'axe (27) de la sonde de mesure (26).

4. Installation suivant l'une quelconque des revendications de 1 à 3,
caractérisée par le fait
que les cathodes (32 - 42), l'anode (28) ainsi que la sonde de mesure (26) sont de préférence portées par la fermeture (22) du récipient (12).

5. Installation suivant l'une quelconque des revendications de 1 à 4,
caractérisée par le fait
que dans la face de la fermeture (22) qui est orientée vers le récipient (12), les cathodes (32 - 42) ont la forme de forures, dans lesquelles peuvent être introduits les supports (52) portant les pièces à traiter (52).

6. Installation suivant l'une quelconque des revendications de 1 à 5,
caractérisée par le fait
que la sonde mesure (26) a la forme d'un embout issu de la paroi de la fermeture (23).

7. Installation suivant l'une quelconque des revendications de 1 à 6,
caractérisée par le fait
que dans le récipient (12) est disposé un agitateur (20) ou des parties d'un agitateur pour l'électrolyte.
